# EUROPÄISCHE PATENTANMELDUNG

(11) **EP 0 881 054 A1**
(43) Veröffentlichungstag der Anmeldung: **02.12.1998**
(21) Anmeldenummer: 98108314.0
(22) Anmeldetag: 07.05.1998
(51) Int. Cl.: B29C 47/92, B29C 47/76

(54) **Entgasung hydrolyseempfindlicher Polymere**

(30) Priorität: 28.05.1997 DE 19722278
(71) Anmelder: Zimmer Aktiengesellschaft, D-60388 Frankfurt (DE); EREMA Engineering Recycling Maschinen und Anlagen Gesellschaft m.b.H., A-4052 Ansfelden-Linz (AT)
(72) Erfinder: Thiele, Ulrich, Dr., 63486 Bruchköbel (DE); Zickler, Dietrich, 63075 Offenbach am Main (DE); Schulz, Helmuth, 4490 St. Florian (AT); Wendelin, Georg, 4033 Linz (AT); Bacher, Helmut, 4490 St. Florian (AT)

(57) **Zusammenfassung**

Verfahren zur Entgasung von hydrolyseempfindlichen Polymeren in einem Extruder mit mindestens einer an eine Vakuumpumpe angeschlossenen Entgasungszone, wobei die Viskosität der aus dem Extruder austretenden Polymerschmelze gemessen und mit einem materialspezifischen, vorgegebenen Sollwert verglichen wird, und die Abweichung als Regelgröße für das Vakuum der Entgasungszone verwandt wird.

## Beschreibung

Die vorliegende Erfindung betrifft ein Verfahren zur Entgasung, insbesondere zur Trocknung von hydrolyseempfindlichen Polymeren unter Vakuum in einem Extruder.

Hydrolyseempfindliche Polymere, wie Polyester, Polyamide, Polycarbonate, Polyarylate, Polyacrylate und deren Copolymere, müssen vor der Weiterverarbeitung einer sorgfältigen Trocknung unterzogen werden, um einen Molekulargewichtsabbau bzw. Viskositätsverlust des Polymers während der Verarbeitung zu verhindern oder zumindest zu minimieren. Die Verarbeitung ungetrockneter oder unzureichend getrockneter hydrolyseempfindlicher Polymere führt in jedem Fall zu einem Qualitätsverlust des Polymeren bis hin zur Unbrauchbarkeit.

Geläufige Trocknungsverfahren für die industrielle Anwendung bei granulatförmigen Polymeren werden mit Vakuumtrockenanlagen, wie Taumeltrockner, Schneckentrockner oder sonstige das Granulatmaterial bewegende und erwärmende Mischsysteme betrieben (US Patent 3 597 850). Eine andere Verfahrensweise arbeitet, statt mit Vakuum, mit erhitzter Luft oder einem Inertgas, wobei zur Verbesserung des Trockeneffekts der Taupunkt des Gasmediums bis auf -25 bis -75 °C abgesenkt werden kann. Bei kristallisierenden Polymeren, wie im Falle der Polyester, treten im Trockner Verklebungen auf, so daO zur Vermeidung von Störungen eine Vorkristallisation vorgeschaltet werden muß (US Patente 3 305 532 und 3 547 890). Beide Verfahrensweisen stellen einen erheblichen Investitions-, Energie- und Betriebskostenaufwand dar.

Bekannt ist weiterhin die Entgasung von Polymerschmelze in Extrudern zur Beseitigung von flüchtigen Bestandteilen, wie Restmonomere und Feuchtigkeit. Hierzu wird in Förderrichtung an einer oder mehreren Stellen des Extruders atmosphärisch oder bevorzugt unter Vakuum entgast (EP-Patent 0 560 033, DE-Patent 3 744 193). Nachteil dieser bekannten technischen Lösungen ist, daß in Abhängigkeit der Ausgangsqualität und des Wassergehaltes der vorgelegten, ungetrockneten Polymere keine konstanten Viskositäten bzw. Molekulargewichte erreicht werden.

Es ist daher Aufgabe der vorliegenden Erfindung, eine neues Verfahren zur Entgasung von Schmelzen hydrolyseempfindlicher, ungetrockneter Polymerer im Extruder zur Verfügung zu stellen, bei dem unter Verzicht auf eine aufwendige und kostenintensive Vortrocknung mit z. T. vorgeschalteter Kristallisation, die entgaste Polymerschmelze einen geregelt geringen Schwankungsbereich des Molekulargewichts aufweist. Des weiteren sollte das Molekulargewicht des Polymeren während der Entgasung so wenig wie möglich verändert werden.

Die Lösung dieser Aufgabe erfolgt erfindungsgemäß durch ein Verfahren gemäß den Angaben der Patentansprüche. Dieses Verfahren ist dadurch gekennzeichnet, daß die Viskosität der aus dem Extruder austretenden Polymerschmelze gemessen und mit einem materialspezifischen, vorgegebenen Sollwert verglichen wird, und die Abweichung als Regelgröße für das Vakuum der Entgasungszone verwandt wird.

Unter hydrolyseempfindlichen Polymeren sind Polymere zu verstehen, die unter dem Einfluß von Feuchtigkeit, insbesondere bei hohen Temperaturen, beispielsweise in der Schmelze, einen mit einem Viskositätsverlust einhergehenden Abbau erleiden. Als solche zu nennen wären Polyester, Polyamide, Polycarbonate, Polyarylate, Polyacrylate und deren Copolymere. Es können sowohl frisch hergestellte Polymere als auch zurückgewonnene Polymerabfälle der Entgasung unterworfen werden. Bevorzugtes Anwendungsgebiet sind Polyalkylenterephthalate und Polyalkylennaphthalate, insbesondere Polyethylenterephthalat und dessen Copolymere.

Diese Polymere enthalten von der Herstellung her geringe Mengen Restmonomere und niedermolekulare Spaltprodukte, gegebenenfalls Lösungsmittelreste, sowie von der Zwischenlagerung her einen mehr oder weniger hohen Feuchtigkeitsgehalt. Um einen Abbau des Polymeren durch diese Verunreinigungen während der Verarbeitung und Formgebung des Polymers in der Schmelzphase zu vermeiden oder zumindest zu minimieren wird der eigentlichen Verarbeitungsstufe eine Entgasung in einem Extruder vorgeschaltet.

Als Entgasungsextruder eignen sich handelsübliche Ein-, Doppel- oder Mehrfachschneckenextruder mit einer oder mehreren, an eine Vakuumpumpe angeschlossenen Entgasungszonen. Hierbei können mehrere Entgasungszonen an die gleiche Vakuumpumpe oder jede Zone an eine separate Pumpe angeschlossen sein. Die Wellendichtungen der Extruderschnecken müssen für Betriebsdrücke bis hin zu 0,1 mbar ausgelegt sein.

Abweichend vom Stand der Technik wird erfindungsgemäß am Austritt aus dem Entgasungsextruder die Viskosität der Polymerschmelze gemessen. Hierzu wird der Schmelzestrom oder bevorzugt ein Teilstrom der Polymerschmelze im Bypass-System einem Viskosimeter, wie Kapillar-, Schlitz- oder Rotationsviskosimeter zugeführt. Die Entnahmestelle der Polymerschmelze für die Viskositätsmessung liegt im Austrittsbereich des Extruders, worunter nicht nur der Ausgang des Extruders als solcher zu verstehen ist, sondern auch der in Strömungsrichtung nach der letzten Entgasungszone liegende, dem Ausgang benachbarte Bereich des Extruders und einer eventuell an den Extruder anschließenden Schmelzeleitung zu verstehen ist. Bei mehreren Entgasungszonen besteht auch die Möglichkeit die Entnahmestelle für die Viskositätsmessung zwischen vorletzter und letzter Entgasungszone anzuordnen bzw. mehrere Entnahmestellen - jeweils eine nach einer beliebigen Entgasungszone - vorzusehen.

Das Viskositäts-Meßgerät ist mit einem Regelungssystem verbunden, welches das Viskositäts-Meßsignal mit einem materialspezifischen, vorgegebenen Sollwert vergleicht und die Abweichung als Regelgröße für die Steuerung des Vakuums der Entgasungszone (n) verwendet. Geregelt wird die Drehzahl der jeweiligen Vakuumpumpe und die Höhe des Vakuums. Bei Vorhandensein mehrerer Vakuumpumpen wird zumindest eine dieser Pumpen an die erfindungsgemäße Regelung angeschlossen. Zusätzlich oder alternativ kann das Vakuum auch durch viskositätsabhängiges Regeln eines Drosselventils oder eines Belüftungsventils in der Leitung zwischen Vakuumpumpe und Entgasungszone gesteuert werden. Die Pumpendrehzahl bzw. das Vakuum werden bei Unterschreiten des Sollwertes erhöht und bei Überschreiten verringert. Entsprechend werden mehr bzw. weniger flüchtige Verbindungen aus der Polymerschmelze entfernt und somit der Abbau des Polymers verringert bzw. verstärkt.

Vorzugsweise, besonders bei Polymeren mit einer höheren Anfangsfeuchte, wird dem Extruder eine an eine Vakuumpumpe angeschlossene Vorentgasungszone für granulatförmiges Polymer unmittelbar vorgeschaltet. Die Polymertemperatur beträgt in dieser Vorentgasungszone mindestens 100 °C und höchstens etwa 20 °C unterhalb der Polymerschmelztemperatur; das Vakuum liegt im Bereich von 0,1 bis 100 mbar. Besonders bevorzugt wird die Abweichung der gemessenen Viskosität vom Sollwert ebenfalls als Regelgröße für die Vakuumpumpe der Vorentgasungszone verwandt. Bei Anlagen geringer Kapazität kann ein und dieselbe geregelte Vakuumpumpe für die Vorentgasung und die Extruder-Entgasung eingesetzt werden.

Während bei Einsatz herkömmlicher Entgasungsextruder, ohne das erfindungsgemäße Regelsystem, die Polymerschmelze zwischen Eintritt und Austritt aus dem Extruder einen meßbaren Abbau erfährt, der um so größer ist, je größer der Feuchtigkeitsgehalt des Einsatzpolymers ist, ermöglicht dieses Regelsystem sowohl eine Minimierung des Abbaus als auch insbesondere einen Ausgleich der Folgen schwankender Feuchtigkeitskonzentrationen. Setzt man den Sollwert gleich der mittleren Viskosität des Polymers vor Eintritt in den Extruder, so lassen sich temporäre Abweichungen vom Sollwert von 3 % und mehr durch Verändern der Drehzahl der Vakuumpumpe(n) und des Vakuums in den Entgasungszonen ausregeln. Bei einem Vakuum in den Entgasungszonen des Extruders im Bereich von 0,1 bis 10 mbar ist es möglich Polyethylenterephthalt mit einer Eintrittsfeuchte im Bereich von 0,1 bis 0,5 Gew.-% bis auf eine Restfeuchte von weniger als 0,001 Gew.-% zu trocknen und dabei die im Bereich von etwa 0,4 bis 0,75 dl/g liegende Intrinsic Viskosität des Polyesters um weniger als 0,020 dl/g, bevorzugt weniger als 0,015 dl/g, bei einem Schwankungsbereich von weniger als ± 0,010 dl/g, bevorzugt weniger als ± 0,008 dl/g, zu verändern. Bei Einsatz von Polyethylenterephthalat-Abfällen liegt der Schwankungsbereich bei weniger als ± 0,015 dl/g. Bei Polyethylenterephthalat höherer Intrinsic Viskosität, wie es zum Beispiel für hochfeste technische Garne verwendet wird, werden prozentual die gleichen Abweichungen erreicht (Absolut-Werte entsprechend höher). Unter Schwankungsbereich ist hierbei die Veränderung der Viskosität während der gesamten Laufzeit des jeweiligen Polyestertyps bzw. von einer Gesamtcharge zu verstehen. Die Intrinsic Viskosität wird hierbei an einer Lösung von 0,5 g Polyester in 100 ml Phenol/1,2-Dichlorbenzol (3:2 Gew. Teile) bei 25 °C bestimmt.

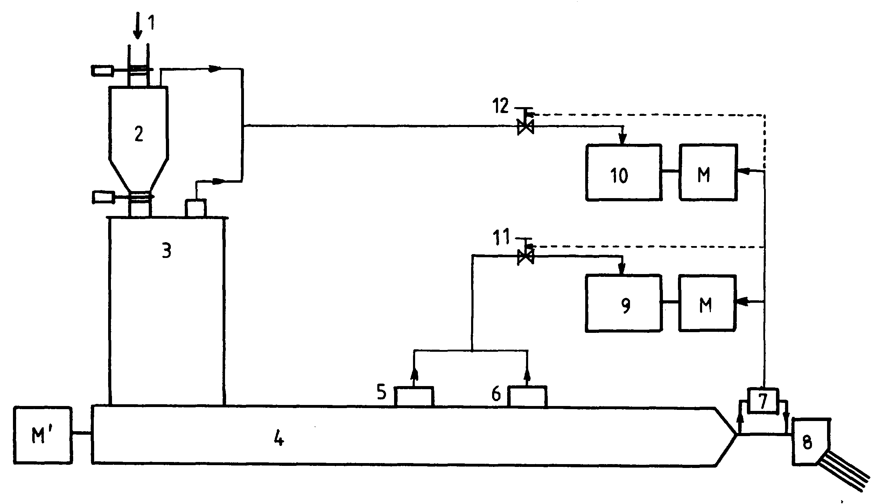

Die Zeichnung zeigt eine Prinzipskizze einer bevorzugten Ausführungsform des erfindungsgemäßen Verfahrens. Das zu entgasende bzw. zu trocknende Polymergranulat (1) gelangt über eine Vakuumschleuse (2) zunächst in die Vorentgasungszone (3), beispielsweise einem Friktionstrockner, wobei das in beiden Aggregaten herrschende Vakuum von der Vakuumpumpe (10) erzeugt wird. Danach gelangt das Granulat über eine tangentiale Beschickungsöffnung in den Extruder (4) mit einer vom Motor (M') angetriebenen Schnecke. In dem an die Beschickungsöffnung anschließenden Bereich des Extruders wird das Granulat aufgeschmolzen, und die Schmelze anschließend beim Durchlaufen der beiden an die Vakuumpumpe (9) angeschlossenen Entgasungszonen (5) und (6) von flüchtigen Bestandteilen, insbesondere Feuchtigkeit befreit. Die aus dem Extruder (4) austretende Polymerschmelze gelangt dann in die Verarbeitungsvorrichtung (8), beispielsweise ein Granulator, eine Filmherstellung, eine Spritzgußmaschine und dergleichen oder auch eine Spinnvorrichtung.

Unmittelbar nach Austritt aus dem Extruder (4) wird ein Teilstrom der Polymerschmelze im Bypass zum Viskosimeter (7) geleitet. Das vom Viskosimeter (7) ausgehende Signal wird nach Vergleich mit dem vorgegebenen Sollwert zur Steuerung der Motoren (M) der beiden Vakuumpumpen (9) und (10) und somit zur Regelung der Motordrehzahl und der Saugleistung bzw. der Höhe des Vakuums verwandt. Zusätzlich kann das Signal auch zur Steuerung der Drossel- oder Belüftungsventile (11, 12) verwendet werden.

### Vergleichsbeispiele 1 - 3 und 5 sowie Beispiele 4 und 6 - 7:

Mit der in der Zeichnung skizzierten Extrusionsanlage wurde ein Polyethylenterephthalat (PET)-Spinnfasertyp mit folgenden Kennwerten:
- Intrinsic Viskosität: 0,636 - 0,643 dl/g
- Glasumwandlungspunkt: 79 - 80 °C
- Kristallisationspunkt: 153 - 155,4 °C
- Schmelzpunkt (DSC): 256 - 257,2 °C
- Ausgangsfeuchte: 0,12 - 0,26 Gew.-%
im ungetrockneten, amorphen Zustand entgast und getrocknet.

Die Zugabe des PET-Granulates erfolgte intervallweise über eine Vakuumschleuse (2). Der Extruder (4) wurde tangential von einem evakuierbaren Friktionstrockner (3) beschickt, in dem das Granulat auf 160 - 170 °C erwärmt und unter einem Vakuum von 3 - 30 mbar vorgetrocknet wurde. Zur Vermeidung von Verklumpungen während der Vortrocknung und Kristallisation sowie zur Beschleunigung der Erwärmung war der Friktionstrockner mit einem mehrstufigen Rührwerk bestückt. Die Verweilzeit im Trockner betrug 60 - 90 Minuten. Die Extruder-Temperatur betrug etwa 275 °C. Der Extruder enthielt 2 Zylinderentgasungen (5) und (6), die mit einem Vakuum von 0,1 bis 70 mbar betrieben wurden. Unmittelbar nach der Schneckenspitze war ein Kapillarviskosimeter (7) zur Messung der Viskosität angeschlossen. Das Drucksignal von diesem Viskosimeter steuerte die Vakuumpumpen (9) und (10) und damit die Vakua am Trockner (3) und an den beiden Entgasungszonen (5) und (6). Bei dieser Versuchsanordnung wurde im Granulator (8) PET-Granulat erzeugt, an dem auch die Viskositäten des Viskosimeters analytisch kontrolliert wurden. Die Ergebnisse sind in nachfolgender Tabelle 1 zusammengestellt.

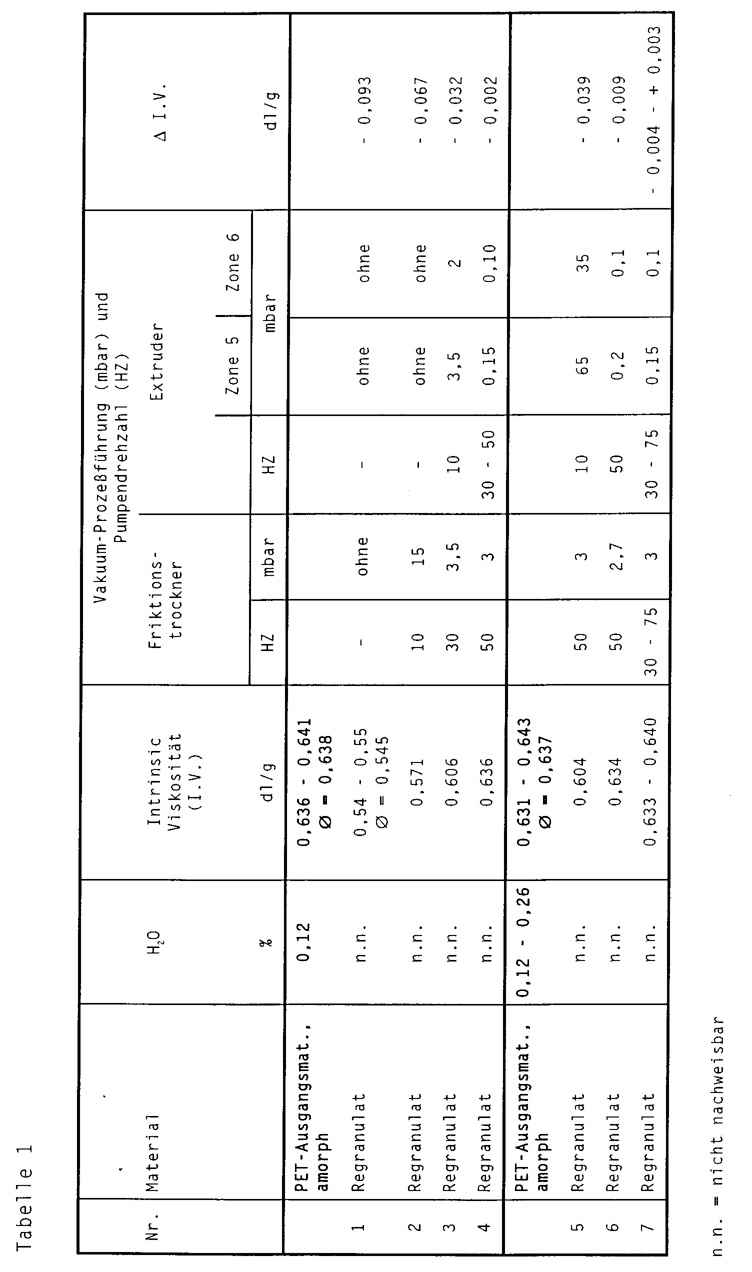

Die vorgenannten Versuche erbringen den Beweis, daß bei entsprechend geregelten Vakua an einem Entgasungs-Extruder durch ein Online-Viskosimeter bei der Verarbeitung von amorphem, ungetrockneten PET-Granulat, PET-Schmelzen mit annähernd unveränderter Viskosität bei einem geringen Schwankungsbereich des Molekulargewichts bzw. der Viskosität erzeugt werden können. Bei den Beispielen 1 - 4 ist deutlich der Einfluß des Vakuums auf die Polymerviskosität zu erkennen. Die Feuchtigkeit im Ausgangsmaterial war dabei praktisch konstant und die Viskositätsschwankungen gering. Bei den Beispielen 5 - 7 schwanken die Wasserwerte und die Ausgangsviskositäten stärker. Durch geregelte Vakua ist ein enger Schwankungsbereich der Viskosität dennoch zu erreichen. Der Abbau bei einem PET mittlerer Viskosität um 0,65 dl/g (Intrinsic Viskosität) beträgt bei vorgeschalteter Vortrocknung bei einem Einschneckenextruder, wie er z. B. in einer Chips-Spinnerei eingesetzt wird, unter 0,01 dl/g. Der Viskositätsabbau liegt somit unter den Werten der bisher bekannten Extrusionsprozesse bzw. macht deutlich, daß bei geregelter Vakuumbehandlung ein Aufbau des Molekulargewichts stattfinden kann.

## Patentansprüche

1. Verfahren zur Entgasung von hydrolyseempfindlichen Polymeren in einem Extruder, wobei das Polymere nach Eintritt in den Extruder zunächst aufgeschmolzen wird und die Polymerschmelze vor Austritt aus dem Extruder mindestens eine an eine Vakuumpumpe angeschlossene Entgasungszone durchläuft, dadurch gekennzeichnet, daß die Viskosität der aus dem Extruder austretenden Polymerschmelze gemessen und mit einem materialspezifischen, vorgegebenen Sollwert verglichen wird, und die Abweichung als Regelgröße für das Vakuum der Entgasungszone verwandt wird.

2. Verfahren gemäß Anspruch 1, dadurch gekennzeichnet, daß die Abweichung der gemessenen Viskosität vom Sollwert als Regelgröße für die Vakuumpumpe verwandt wird und damit die Drehzahl der Vakuumpumpe und das Vakuum der Entgasungszone geregelt werden.

3. Verfahren gemäß Anspruch 1 oder 2, dadurch gekennzeichnet, daß die Abweichung der gemessenen Viskosität vom Sollwert als Regelgröße für ein Drosselventil oder Belüftungsventil zwischen Vakuumpumpe und Entgasungszone verwandt wird und damit das Vakuum der Entgasungszone geregelt wird.

4. Verfahren gemäß einem der Ansprüche 1 bis 3, dadurch gekennzeichnet, daß die Polymerschmelze mehrere Entgasungszonen durchläuft, wobei die Abweichung der gemessenen Viskosität vom Sollwert als Regelgröße für das Vakuum mindestens einer der Entgasungszonen verwandt wird.

5. Verfahren gemäß einem der Ansprüche 1 bis 4, dadurch gekennzeichnet, daß das Polymere unmittelbar vor Eintritt in den Extruder eine an eine Vakuumpumpe angeschlossene Vorentgasungszone bei einer Polymertemperatur im Bereich von 100 °C bis etwa 20 °C unterhalb der Polymerschmelztemperatur durchläuft.

6. Verfahren gemäß Anspruch 5, dadurch gekennzeichnet, daß die Abweichung der gemessenen Viskosität vom Sollwert ebenfalls als Regelgröße für das Vakuum der Vorentgasungszone verwandt wird.

7. Verfahren gemäß einem der Ansprüche 1 bis 6, dadurch gekennzeichnet, daß die Drehzahl der Vakuumpumpe(n) und das Vakuum bei Unterschreiten des Sollwertes erhöht und bei Überschreiten verringert werden.

8. Verfahren gemäß einem der Ansprüche 1 bis 7, dadurch gekennzeichnet, daß der Sollwert gleich der mittleren Viskosität des Polymers vor Eintritt in den Extruder ist, und daß bei einer temporären Abweichung der am Austritt gemessenen Viskosität vom Sollwert die Drehzahl der Vakuumpumpe(n) und das Vakuum solange geregelt verändert werden, bis die Abweichung weniger als 3 % des Sollwertes beträgt.

9. Verfahren gemäß Anspruch 8, dadurch gekennzeichnet, daß das Polymere Polyethylenterephthalat mit einer Intrinsic Viskosität im Bereich von 0,4 bis 0,75 dl/g ist und während der Entgasung im Extruder einer Veränderung der Intrinsic Viskosität von weniger als 0,020 dl/g bei einem Schwankungsbereich von weniger als ± 0,015 dl/g unterliegt.
